# EUROPEAN PATENT APPLICATION

(11) **EP 4 826 275 A1**
(43) Date of publication of application: **21.10.2026**
(21) Application number: 25170700.6
(22) Date of filing: 15.04.2025
(51) Int. Cl.: F16H 3/54, B60K 1/00

(54) **A TRANSMISSION ARRANGEMENT, A POWERTRAIN AND A VEHICLE**

(71) Applicant: Volvo Truck Corporation, 405 08 Göteborg (SE)
(72) Inventor: NORBERG, Sven, 422 47 HISINGS BACKA (SE)
(74) Representative: Kransell & Wennborg KB

(57) **Abstract**

The disclosure relates to a transmission arrangement (320) for a vehicle (200), comprising:
- an input shaft (11),
- a reduction gearset (330) drivingly connected to the input shaft (11) and provided downstream the input shaft (11),
- a planetary gearset (340) drivingly connectable to an output (333) of the reduction gearset (330) and provided downstream the reduction gearset (330), and is configured to be shiftable between at least two planetary gear states, comprising a direct gear state with a 1:1 speed ratio and a speed reduction gear state,
- a planetary gearset output (346) configured to transfer torque to at least one drive shaft (90L, 90R) downstream the planetary gearset (340), and
- a first clutch member (345) and a second clutch member (344). The disclosure also relates to a powertrain (100) and a vehicle (200).

## Description

### TECHNICAL FIELD

The disclosure relates generally to transmissions for vehicles. In particular aspects, the disclosure relates to a transmission arrangement for a vehicle, a powertrain and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A transmission for a vehicle is generally adapted for transferring power at different speed ratios from an internal combustion engine to drive wheels. However, due to the electrification trend, there is also a need to develop transmissions for transferring power between an electric motor/generator and drive wheels. To this end, shiftable transmissions may not always be required for electric vehicles, such as for electric passenger cars. However, for larger and heavier electric vehicles, such as trucks, buses and construction equipment, it may be beneficial to use a shiftable transmission.

In view of the above, there is a strive to develop improved technology relating to shiftable transmissions for vehicles, in particular electric vehicles.

### SUMMARY

According to a first aspect of the disclosure, a transmission arrangement for a vehicle is provided. The transmission arrangement comprises:
- an input shaft configured to be drivingly connected to a power unit upstream from the input shaft,
- a reduction gearset drivingly connected to the input shaft and provided downstream the input shaft,
- a planetary gearset with at least one member drivingly connectable to an output of the reduction gearset and provided downstream the reduction gearset, wherein the planetary gearset comprises a first planetary gear member, a second planetary gear member, and a third planetary gear member, and is further configured to be shiftable between at least two planetary gear states, comprising a direct gear state with a 1:1 speed ratio and a speed reduction or increase gear state,

- a planetary gearset output configured to transfer torque to at least one drive shaft downstream the planetary gearset,
- a first clutch member movable between at least two different first clutch member positions,
- a second clutch member movable between at least two different second clutch member positions,
wherein
the transmission arrangement is configured such that, the first clutch member can rotationally connect the output of the reduction gearset to the first and second planetary gear members, the second clutch member can rotationally connect the third planetary gear member to a fixed member of the transmission arrangement, and either the first or second clutch member can selectively and simultaneously rotationally connect at least two planetary gear members of the first, second and third planetary gear members, and
the second planetary gear member is permanently rotationally connected to the planetary gearset output.

The first aspect of the disclosure may seek to provide an improved transmission arrangement for a vehicle. A technical benefit may include that more favorable transmission gear states of the transmission arrangement are achieved. For example, by the configuration of the transmission arrangement as disclosed herein, components such as bearings and planet gearwheels of the planetary gearset may be unloaded in at least one gear state when torque is transferred from the input shaft to the planetary gearset output. This is since torque may be transferred through the second planetary gear member, without any torque transferred via e.g. bearings in the planetary gearset, when the second planetary gear member is rotationally connected to the output of the reduction gearset. This may also be regarded as bypassing the planetary gearset. As another example, by the configuration of the transmission arrangement as disclosed herein, the output of the reduction gearset may be drivingly disconnected from the planetary gearset while also allowing the planetary gearset to be internally locked. This may reduce efficiency losses of the transmission arrangement§. As a yet further example, by the configuration of the transmission arrangement as disclosed herein, the rotational state of the first, second and third planetary gear members may be controlled at all times. This may reduce efficiency losses of the transmission arrangement and/or facilitate synchronization and thus gear shifting.

A reduction gearset as disclosed herein means a gearset which is adapted to provide a speed reduction, i.e., as seen from an input side to an output side of the reduction gearset.

The terms downstream and upstream as used herein relate to a direction of a torque path from a connection interface of the power unit to the at least one drive shaft. Accordingly, downstream means that something is provided further down in the aforementioned direction and upstream means that something is provided further up in the aforementioned direction.

Optionally in some examples, including in at least one preferred example, the first clutch member is movable between at least three different first clutch member positions and the transmission arrangement is configured such that, in at least one of the at least three different first clutch member positions of the first clutch member, the output of the reduction gearset is rotationally free with respect to the planetary gearset. A technical benefit may include that the reduction gearset can be completely disconnected from the at least one drive shaft, thereby allowing the reduction gearset and power unit to be non-rotating with zero losses when the vehicle is rolling freely without connected power unit.

Optionally in some examples, including in at least one preferred example, the at least two different first clutch member positions of the first clutch member comprise any one or any combination of:
a first clutch member first position in which the first clutch member is rotationally connected to the first planetary gear member and to the output of the reduction gearset, and is further rotationally free with respect to the second planetary gear member,
a first clutch member second position in which the first clutch member is rotationally connected to the first planetary gear member and to the second planetary gear member, and is further rotationally free with respect to the output of the reduction gearset, and
a first clutch member third position in which the first clutch member is rotationally connected to the first planetary gear member, the output of the reduction gearset and the second planetary gear member.

A technical benefit of the first clutch member first position may include that torque is allowed to be transferred from the output of the reduction gearset to the planetary gearset while also allowing a speed reduction through the planetary gearset. This position may additionally or alternatively be beneficial for synchronization.

A technical benefit of the first clutch member second position may include that the planetary gearset is internally locked while the planetary gearset is rotationally disconnected from the output from the reduction gearset. This may result in reduced efficiency losses, i.e., since any relative rotation of the planetary gearset members are prevented. By internally locked does herein mean that the first, second and third planetary gear members are arranged to rotate together, i.e., that the first, second and third planetary gear members are rotationally fixed relative each other.

A technical benefit of the first clutch member third position may include that torque may be transferred from the output of the reduction gearset directly through a member of the planetary gearset without any speed reduction through the planetary gearset, while also avoiding any load on components such as bearings and planet gearwheels of the planetary gearset. Thereby, the service life of the planetary gearset may be improved.

Optionally in some examples, including in at least one preferred example, the first clutch member is rotationally connected to the first planetary gear member and further rotationally connected to at least one of the output of the reduction gearset and to the second planetary gear member during all intermediate positions between the first clutch member first and second positions, and/or during all intermediate positions between the first clutch member second and third positions. A technical benefit may include that the first and the second planetary gear members are rotationally controlled at all times. Thereby, also the third planetary gear member will be rotationally controlled, and this may be beneficial for synchronization.

Optionally in some examples, including in at least one preferred example, the at least two different second clutch member positions comprises a second clutch member first position in which the third planetary gear member is rotationally connected to the fixed member of the transmission arrangement and a second clutch member second position in which the third planetary gear member is rotationally free with respect to the fixed member of the transmission arrangement. A technical benefit may include that the planetary gearset may be internally locked in the direct gear state. A technical benefit may also include that internal losses in the planetary gearset is reduced.

Optionally in some examples, including in at least one preferred example, the first clutch member and the second clutch member are configured to be moved in unison during shifting. A technical benefit may include that only one shift actuator may be used for moving the first and second clutch members. Hence, this may result in a more cost-effective configuration, requiring fewer components of the transmission arrangement.

Optionally in some examples, including in at least one preferred example, the first clutch member and the second clutch member are mechanically connected such that a shifting force exerted on one of the first clutch member and the second clutch member by a shift member is distributed between the first clutch member and the second clutch member such that the first clutch member and the second clutch member are moved in unison during shifting. A technical benefit may include that only one shift actuator and/or only one shift fork may be used for moving the first and second clutch members. A technical benefit may additionally or alternatively include that fewer separate components are required.

Optionally in some examples, including in at least one preferred example, the reduction gearset comprises a first gearwheel and a second gearwheel which are drivingly connected, wherein the second gearwheel is provided downstream the first gearwheel and wherein the second gearwheel and the planetary gearset are coaxially arranged and configured to rotate with respect to a common rotational axis. A technical benefit may include that a more compact configuration is achieved.

Optionally in some examples, including in at least one preferred example, the transmission arrangement further comprises a differential gear with its input drivingly connected to the planetary gearset output and provided downstream the planetary gearset output, wherein output members of the differential gear are configured to be rotationally connected to the at least one drive shaft downstream the differential gear. A technical benefit may include that the transmission arrangement also comprises a differential gear, allowing different rotational speeds to be simultaneously distributed to respective drive shafts.

Optionally in some examples, including in at least one preferred example, the differential gear, the second gearwheel and the planetary gearset are coaxially arranged and configured to rotate with respect to the common rotational axis. A technical benefit may include that a compact transmission arrangement including a differential gear is provided.

Optionally in some examples, including in at least one preferred example, the transmission arrangement further comprises a bevel gearset rotationally connected to the planetary gearset output and provided downstream the planetary gearset output, wherein the differential gear with its input is drivingly connected to the bevel gearset and provided downstream the bevel gearset, and wherein output members of the differential gear are configured to be rotationally connected to the at least one drive shaft. A technical benefit may include that a rotational axis of the at least one drive shaft is angled relative the planetary gearset rotational axis and/or the second gearwheel rotational axis. By way of example, the differential gear rotational axis may be perpendicular to the planetary gear rotational axis. A technical benefit may include that a rotational axis of the power unit may be arranged along a longitudinal direction of the vehicle, when the transmission arrangement is provided in the vehicle.

Optionally in some examples, including in at least one preferred example, the first, second and third planetary gear members are a combination of a sun gearwheel, a planet carrier carrying a plurality of planet gearwheels, and a ring gearwheel.

Optionally in some examples, including in at least one preferred example, the first planetary gear member is the sun gearwheel. A technical benefit may include that a compact transmission arrangement is provided which can provide favorable transmission gear states.

Optionally in some examples, including in at least one preferred example, the second planetary gear member is the planet carrier. A technical benefit may include that a compact transmission arrangement is provided while also enabling the planet carrier to be the only load carrying component of the planetary gearset in at least one transmission gear state. A technical benefit may additionally or alternatively include that the planet carrier and a member of the differential gear may be integrated.

Optionally in some examples, including in at least one preferred example, the third planetary gear member is the ring gearwheel. A technical benefit may include that the ring gearwheel can be configured to be selectively rotationally fixed or free with respect to the fixed member of the transmission arrangement for providing the direct gear state and the speed reduction gear state of the planetary gearset.

Optionally in some examples, including in at least one preferred example, the second planetary gear member is the ring gearwheel. A technical benefit may include that the ring gearwheel is the only load carrying component of the planetary gearset in at least one transmission gear state.

Optionally in some examples, including in at least one preferred example, the third planetary gear member is the sun gearwheel. A technical benefit may include that the sun gearwheel can be configured to be selectively rotationally fixed or free with respect to the fixed member of the transmission arrangement for providing the direct gear state and the speed reduction gear state of the planetary gearset.

According to a second aspect of the disclosure, a powertrain for a vehicle is provided. The powertrain comprises a power unit, at least one drive shaft and a transmission arrangement according to any one of the examples of the first aspect of the disclosure. The second aspect of the disclosure may seek to provide an improved powertrain for a vehicle, such as for an electric vehicle where the power unit is an electric motor/generator. A technical benefit may include that more favorable transmission gear states of the transmission arrangement are achieved. Advantages and technical benefits of the second aspect of the disclosure are analogous to the advantages and technical benefits of the first aspect of the disclosure.

Optionally in some examples, including in at least one preferred example, the planetary gearset and the at least one drive shaft are coaxially arranged and configured to rotate with respect to a common rotational axis. A technical benefit may include that a compact powertrain configuration is achieved.

According to a third aspect of the disclosure, a vehicle is provided. The vehicle comprises a transmission arrangement according to any one of the examples of the first aspect of the disclosure or a powertrain according to any one of the examples of the second aspect of the disclosure. Advantages and technical benefits of the third aspect of the disclosure are analogous to the advantages and technical benefits of the first and second aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary transmission arrangement and/or powertrain in a schematic view according to an example.
**FIG. 3** is an exemplary transmission arrangement and/or powertrain in a schematic view according to an example.
**FIG. 4** is an exemplary transmission arrangement and/or powertrain in a schematic view according to an example.
**FIG. 5** is an exemplary transmission arrangement and/or powertrain in a schematic view according to an example.
**FIGS. 6A-E** is an exemplary transmission arrangement and/or powertrain in schematic views according to an example.
**FIGS. 7A-E** is an exemplary transmission arrangement and/or powertrain in schematic views according to an example.
**FIG. 8** is an exemplary transmission arrangement and/or powertrain in a schematic view according to an example.
**FIG. 9** is an exemplary transmission arrangement and/or powertrain in a schematic view according to an example.
**FIG. 10** is an exemplary transmission arrangement and/or powertrain in a schematic view according to an example.
**FIG. 11** is an exemplary transmission arrangement and/or powertrain in a schematic view according to an example.

The drawings are not necessarily drawn to scale. It shall also be noted that some details in the drawings may be exaggerated in order to better describe and illustrate the particular example. Like reference characters refer to like elements throughout the description, unless expressed otherwise. Some reference characters may have been omitted in some of the drawings for clarity.

### DETAILED DESCRIPTION

The detailed description set forth below provides information and examples of the disclosed technology with sufficient detail to enable those skilled in the art to practice the disclosure.

An aim of the present disclosure is to provide an improved transmission arrangement for a vehicle which at least partly alleviates one or more drawbacks of the prior art, or which at least provides a suitable alternative. Other aims of the present disclosure are to provide an improved powertrain and a vehicle, which at least partly alleviate one or more drawbacks of the prior art, or which at least provide suitable alternatives. The transmission arrangement as disclosed herein may seek to provide a compact, cost-effective and efficient transmission arrangement for a vehicle. The configuration of the transmission arrangement as disclosed herein has shown to be advantageous for vehicle powertrains, such as for fully or at least partially electric powertrains. By way of example, by the present disclosure, a compact transmission arrangement may be provided which can be shifted between at least two different "gears" or speed ratios. By the configuration of the transmission arrangement as disclosed herein, components such as bearings and planet gearwheels of the planetary gearset may be unloaded in at least one of the gear states when torque is transferred from the input shaft to the planetary gearset output. As another example, by the configuration of the transmission arrangement as disclosed herein, the output of the reduction gearset may be drivingly disconnected from the planetary gearset while also allowing the planetary gearset to be internally locked. As a yet further example, by the configuration of the transmission arrangement as disclosed herein, the rotational state of the first, second and third planetary gear members may be controlled or at least well defined at all times. This may reduce efficiency losses of the transmission arrangement.

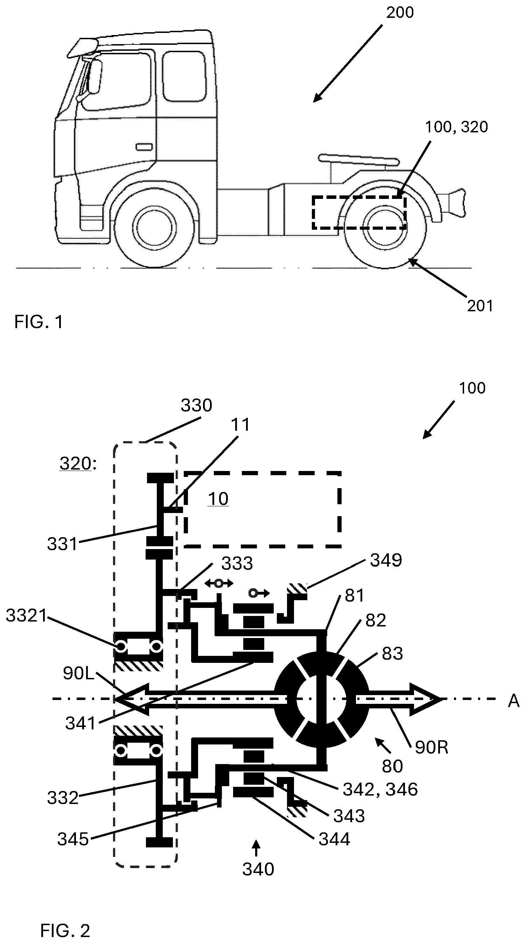

**FIG. 1** is an exemplary vehicle 200 in a side view according to an example. The vehicle 200 is a heavy-duty truck, and more particularly a tractor truck for towing one or more trailers (not shown). It shall however be noted that the present disclosure is applicable to any other vehicle, such as any other truck, a bus, a passenger car, construction equipment, such as a wheel loader, an excavator, a dump truck etc.

The vehicle 200 may as shown comprise a transmission arrangement 320 and/or a powertrain 100 according to examples of the present disclosure. The powertrain 100 comprises a power unit (not shown) which is drivingly connected to drive wheels 201 via the transmission arrangement 320. More detailed examples of the transmission arrangement 320 and the powertrain 100 will be described in the below. The drive wheels 201 are in this example rear wheels of the vehicle 200. It shall however be noted that drive wheels may be provided at any other location, such as at the front of the vehicle. In other examples, drive wheels may be used for driving crawler members of the vehicle, e.g., of an excavator.

**FIG. 2** depicts an exemplary transmission arrangement 320 in a schematic view according to an example, which for example may form part of the vehicle 200 shown in FIG. 1.

The transmission arrangement 320 comprises an input shaft 11 configured to be drivingly connected to a power unit 10 upstream from the input shaft 11. The power unit 10 is herein indicated by a box with dashed lines, i.e., indicating that it is not part of the transmission arrangement 320 as such. Accordingly, FIG. 2 also depicts a powertrain 100 according to an example disclosed herein, wherein the power unit 10 is drivingly connected to the input shaft 11.

The transmission arrangement 320 further comprises a reduction gearset 330 drivingly connected to the input shaft 11 and provided downstream the input shaft 11. The reduction gearset 330 is configured to provide a speed reduction from the input shaft 11 to an output 333 from the reduction gearset 330. The reduction gearset is in FIG. 2 highlighted by a box with dashed lines. As shown, the reduction gearset 330 may comprise a first gearwheel 331 and a second gearwheel 332 which are drivingly connected. The second gearwheel 332 is provided downstream the first gearwheel 331. In this example, the first gearwheel 331 is in meshing engagement with the second gearwheel 332 and configured such that a speed reduction is achieved from the first gearwheel 331 to the second gearwheel 332. It shall however be noted that the reduction gearset 330 may not necessarily only comprise two gearwheels. By way of example, in other examples, the reduction gearset 330 may comprise at least one additional gearwheel in-between the first and second gearwheels. The reduction gearset 330 may additionally or alternatively be shiftable for providing different speed reductions. In yet further examples, the reduction gearset may comprise additional planetary gearsets.

Further, in the example shown in e.g. FIG. 2, the second gearwheel 332 is supported by at least one rolling bearing 3321, which in this example is in the form of a ball bearing. It shall however be noted that any other type of rolling bearing may be used, such as a roller bearing.

The transmission arrangement 320 further comprises a planetary gearset 340 with at least one member drivingly connectable to the output 333 of the reduction gearset 330 and provided downstream the reduction gearset 330. The planetary gearset 340 comprises a first planetary gear member 341, a second planetary gear member 342 and a third planetary gear member 344. The planetary gearset 340 is further configured to be shiftable between at least two planetary gear states, comprising a direct gear state with a 1:1 speed ratio and a speed reduction gear state.

The transmission arrangement 320 further comprises a planetary gearset output 346 of the planetary gearset 340 configured to transfer torque, or power, to at least one drive shaft 90L, 90R downstream the planetary gearset 340. The at least one drive shaft, which not as such necessarily forms part of the transmission arrangement 320, but instead may form part of the herein disclosed powertrain 100, may as shown comprise two half-shafts 90L, 90R.

The transmission arrangement 320 further comprises a first clutch member 345 movable between at least two, preferably at least three, different first clutch member positions. The first clutch member 345 may be a sleeve formed member. The first clutch member 345 may comprise teeth (e.g. configured as a dog clutch) for interlocking rotating components and/or may be configured to interlock rotating components by friction force.

As further shown in e.g. FIG. 2, the planetary gearset 340 comprises a second clutch member 344 which is movable between at least two different second clutch member positions.

The second clutch member 344 may as shown be the same component as the third planetary gear member 344. More specifically, in this example, the third planetary gear member 344 is a ring gearwheel of the planetary gearset 340. Accordingly, the third planetary gear member 344 may as shown be axially movable and configured to act as the second clutch member. In other examples, however, the second clutch member may be a separate component. Using the third planetary gear member 344 as the second clutch member may result in fewer separate components of the planetary gearset 340. Accordingly, this may result in a more cost-effective configuration.

The transmission arrangement 320 is configured such that, the first clutch member 345 can rotationally connect the output 333 of the reduction gearset 330 to the first and second planetary gear members 341, 342, the second clutch member 344 can rotationally connect the third planetary gear member 344 to a fixed member 349 of the transmission arrangement 320, and either the first or second clutch member 345, 344 can selectively and simultaneously rotationally connect at least two planetary gear members of the first, second and third planetary gear members 341, 342, 344. Also, the second planetary gear member 342 is permanently rotationally connected to the planetary gearset output 346.

As further shown in e.g. FIG. 2, the transmission arrangement 320 may be configured such that, in each one of the at least two, preferably the at least three, different first clutch member positions, the first clutch member 345 is rotationally connected to the first planetary gear member 341 and further rotationally connected to at least one of the output 333 of the reduction gearset 330 and the second planetary gear member 342.

As further shown in e.g. FIG. 2, the transmission arrangement 320 may be configured such that, in at least one of the at least three different first clutch member positions of the first clutch member 345, the output 333 of the reduction gearset 330 is rotationally free with respect to the planetary gearset 340.

Preferably, the at least two, preferably the at least three, different first clutch member positions of the first clutch member 345 comprise any one or any combination of:
a first clutch member first position in which the first clutch member 345 is rotationally connected to the first planetary gear member 341 and to the output 333 of the reduction gearset 330, and is further rotationally free with respect to the second planetary gear member 342,
a first clutch member second position in which the first clutch member 345 is rotationally connected to the first planetary gear member 341 and to the second planetary gear member 342, and is further rotationally free with respect to the output 333 of the reduction gearset 330, and
a first clutch member third position in which the first clutch member 345 is rotationally connected to the first planetary gear member 341, the output 333 of the reduction gearset 330 and the second planetary gear member 342.

In some examples, the first clutch member 345 may be rotationally connected to the first planetary gear member 341 and further rotationally connected to at least one of the output 333 of the reduction gearset 330 and to the second planetary gear member 342 during all intermediate positions between the first clutch member first and second positions.

As further shown in e.g. FIG. 2, the at least two second clutch member positions may comprise a second clutch member first position in which the third planetary gear member 344 is rotationally connected to the fixed member 349 of the transmission arrangement 320 and a second clutch member second position in which the third planetary gear member 344 is rotationally free with respect to the fixed member 349 of the transmission arrangement 320.

Similar to the first clutch member 345, the second clutch member 344 may comprise teeth (e.g. configured as a dog clutch) for interlocking the third planetary gear member 344 with the fixed member 349 and/or may be configured to interlock the third planetary gear member 344 with the fixed member 349 by friction force.

The fixed member 349 may form part of a transmission housing (not shown).

The second gearwheel 332 and the planetary gearset 340 may as shown in e.g. FIG. 2 be coaxially arranged and configured to rotate with respect to a common rotational axis A.

The first and second clutch members 345, 344 may also as shown in e.g. FIG. 2 be axially movable along the common rotational axis A.

The transmission arrangement 320 may further comprise a differential gear 80 with an input drivingly connected to the planetary gearset output 346 and provided downstream the planetary gearset output 346. Output members 83 of the differential gear 80 may as shown be configured to be rotationally connected to the at least one drive shaft 90L, 90R downstream the differential gear 80. As shown, the differential gear 80 may also be coaxially arranged with the second gearwheel 332 and the planetary gearset 340 and configured to rotate with respect to the common rotational axis A.

With further reference to e.g. FIG. 2, the first, second and third planetary gear members 341, 342, 344 are preferably a combination of a sun gearwheel 341, a planet carrier 342 carrying a plurality of planet gearwheels 343, and a ring gearwheel 344.

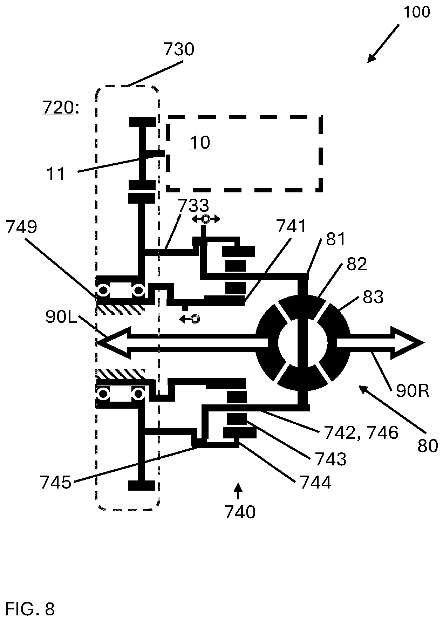

In FIG. 2, the first planetary gear member 341 is the sun gearwheel 341, the second planetary gear member 342 is the planet carrier 342, and the third planetary gear member 344 is the ring gearwheel 344. It shall however be noted that this is not the only possible configuration. Other configurations are also possible, whereby three other possible configurations are shown in **FIG. 8****,** **FIG. 9** and **FIG. 11****.**

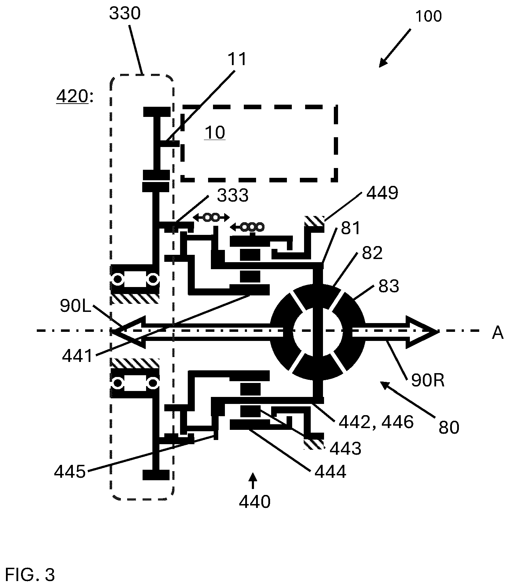

**FIG. 3** depicts an exemplary transmission arrangement 420 in a schematic view according to an example, which for example may form part of the vehicle 200 shown in FIG. 1. The transmission arrangement 420 in FIG. 3 differs to some extent from the transmission arrangement in e.g. FIG. 2.

In this example, there is a planetary gearset 440 which comprises a first planetary gear member 441 (in this example a sun gearwheel), a second planetary gear member 442 (in this example a planet carrier carrying a plurality of planet gearwheels 443), and a third planetary gear member 444 (in this example a ring gearwheel).

The transmission arrangement 420 also comprises a fixed member 449, similar to the example in FIG. 2.

At least one member of the planetary gearset 440 is drivingly connectable to an output 333 of the reduction gearset. The planetary gearset 440 is further configured to be shiftable between at least two planetary gear states, comprising a direct gear state with a 1:1 speed ratio and a speed reduction gear state.

Similar to the example in FIG. 2, a planetary gearset output 446 is also provided, configured to transfer torque to at least one drive shaft 90L, 90R downstream the planetary gearset 440.

In FIG. 3, the first clutch member is denoted 445 and the second clutch member is denoted 444 (i.e. corresponds to the ring gearwheel).

The first clutch member 445 and the second clutch member 444 may have four different positions and may be controlled by one actuator (not shown).

In the example in FIG. 3, the first clutch member 445 and the second clutch member 444 are configured to be moved in unison during shifting.

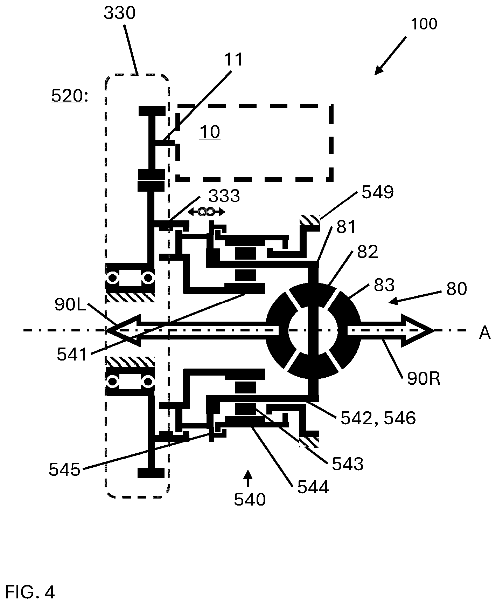

FIG. 4 depicts an exemplary transmission arrangement 520 in a schematic view according to an example, which for example may form part of the vehicle 200 shown in FIG. 1. The transmission arrangement 520 in FIG. 4 differs to some extent from the transmission arrangements in e.g. Fig. 2 and Fig. 3.

In this example, there is a planetary gearset 540 which comprises a first planetary gear member 541 (in this example a sun gearwheel), a second planetary gear member 542 (in this example a planet carrier carrying a plurality of planet gearwheels 543), and a third planetary gear member 544 (in this example a ring gearwheel).

The transmission arrangement 520 also comprises a fixed member 549, similar to the examples in FIG. 2 and FIG. 3.

At least one member of the planetary gearset 540 is drivingly connectable to an output 333 of the reduction gearset 330. The planetary gearset 540 is further configured to be shiftable between at least two planetary gear states, comprising a direct gear state with a 1:1 speed ratio and a speed reduction gear state.

Similar to the examples in FIG. 2 and FIG. 3, a planetary gearset output 546 is also provided, configured to transfer torque to at least one drive shaft 90L, 90R downstream the planetary gearset 540.

In the example in FIG. 4, the first clutch member 545 and the second clutch member 544 are axially connected. More specifically, the first clutch member 545 and the second clutch member 544 may be mechanically connected such that a shifting force exerted on one of the first clutch member 545 and the second clutch member 544 by a shift member (not shown) is distributed between the first clutch member 545 and the second clutch member 544 such that the first clutch member 545 and the second clutch member 544 are moved in unison during shifting. The shift member may be an actuator, or a shift fork connecting an actuator with the first clutch member 545 or the second clutch member 544.

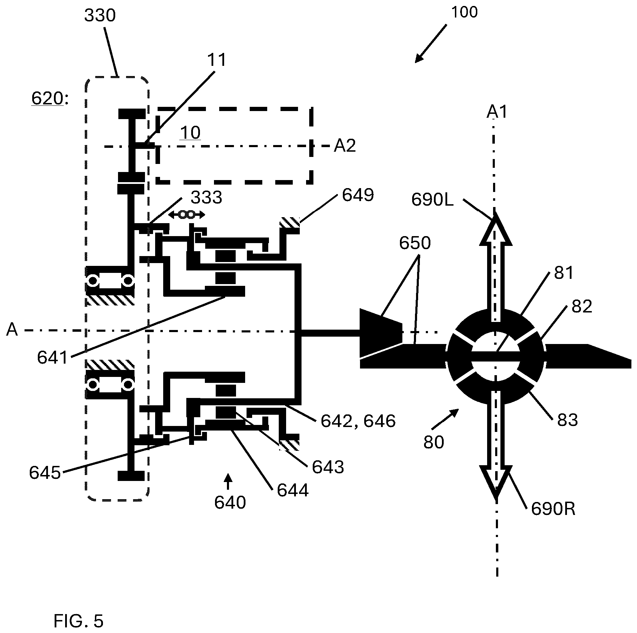

**FIG. 5** depicts an exemplary transmission arrangement 620 in a schematic view according to an example, which for example may form part of the vehicle 200 shown in FIG. 1. The transmission arrangement 620 in FIG. 5 differs to some extent from the transmission arrangements in e.g. FIG. 2, FIG. 3 and FIG. 4.

In this example, there is a planetary gearset 640 which comprises a first planetary gear member 641 (in this example a sun gearwheel), a second planetary gear member 642 (in this example a planet carrier carrying a plurality of planet gearwheels 643), and a third planetary gear member 644 (in this example a ring gearwheel).

The transmission arrangement 620 also comprises a fixed member 649, similar to the examples in FIG. 2, FIG. 3 and FIG. 4.

At least one member of the planetary gearset 640 is drivingly connectable to an output 333 of the reduction gearset 330. The planetary gearset 640 is further configured to be shiftable between at least two planetary gear states, comprising a direct gear state with a 1:1 speed ratio and a speed reduction gear state.

Similar to the examples in FIG. 2, FIG. 3 and FIG. 4, a planetary gearset output 646 is also provided, configured to transfer torque to at least one drive shaft 690L, 690R downstream the planetary gearset 640.

The transmission arrangement 620 in FIG. 5 further comprises a bevel gearset 650, or hypoid gearset, rotationally connected to the planetary gearset output 646 and provided downstream the planetary gearset output 646. A differential gear 80 with its input drivingly connected to the bevel gearset 650 and provided downstream the bevel gearset 650. Output members 83 of the differential gear 80 are configured to be rotationally connected to the at least one drive shaft 690L, 690R. In this example, the at least one drive shaft comprises two half-shafts 690L, 690R.

A differential gear rotational axis A1 is perpendicular to a planetary gear rotational axis A. The differential gear 80 and the at least one drive shaft 690L, 690R may as shown be coaxially arranged and configured to rotate with respect to a common rotational axis A1.

By the configuration in FIG. 5, a rotational axis A2 of the power unit 10 may be arranged along a longitudinal direction of the vehicle 200. Even though the power unit 10 in FIGS. 2-5 is coaxially arranged with the input shaft 11, it shall be noted that other configurations are also possible, such as arranging the power unit with its rotational axis perpendicular to the input shaft rotational axis. By a rotational axis A2 of the power unit 10 is herein meant a rotational axis of an output shaft of the power unit, i.e., an output shaft which is configured to be drivingly connected to the input shaft 11 of the transmission arrangement.

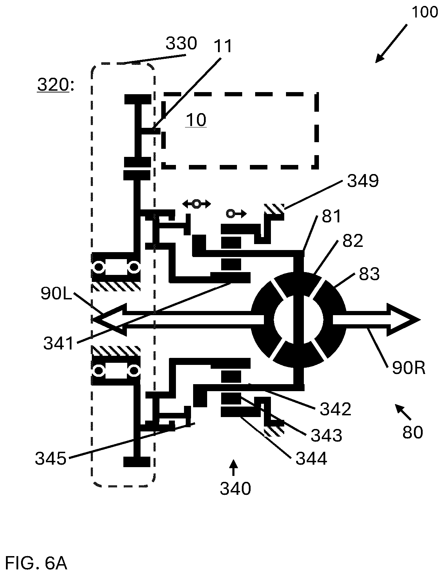

**FIGS. 6A-E** is an exemplary transmission arrangement 320 and/or powertrain 100 in schematic views according to an example. More specifically, FIGS. 6A-E depict the transmission arrangement 320 in FIG. 2 when it is provided in different transmission gear states by movement of the first clutch member 345 and the second clutch member 344.

In FIG. 6A, the first clutch member 345 is in the first clutch member first position and the second clutch member 344 is in the second clutch member first position. This transmission gear state may be denoted a low speed mode of the transmission arrangement. The planetary gearset 330 is here in its speed reduction gear state.

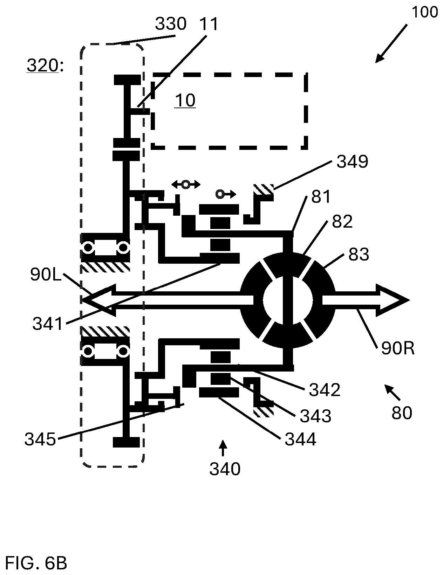

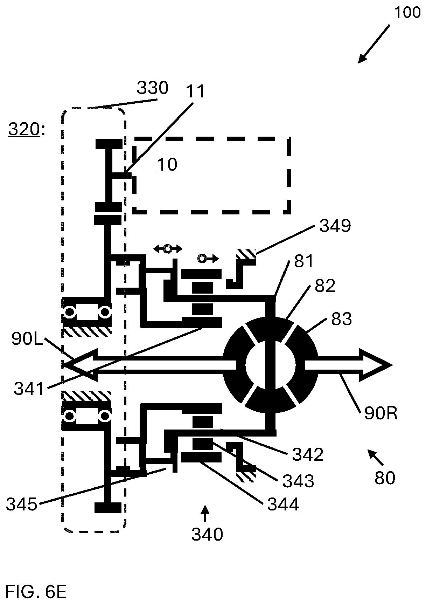

In FIG. 6B, the first clutch member 345 is still in the first clutch member first position but the second clutch member 344 is in the second clutch member second position. This transmission gear state may be denoted a neutral mode of the transmission arrangement, i.e. when no torque is transferrable between the power unit 10 and the at least one drive shaft 90L, 90R. In this state, the speed of the first planetary gear member 341 may be directly controlled by the power unit 10. The third planetary gear member 344 may be indirectly controlled by the power unit 10 since the speed of the second planetary gear member 342 is given by the speed of the at least one drive shaft 90L, 90R. By adjusting the speed of the power unit 10, synchronization may be achieved for shifting the transmission arrangement into the low speed mode or into a high speed mode (see FIG. 6E).

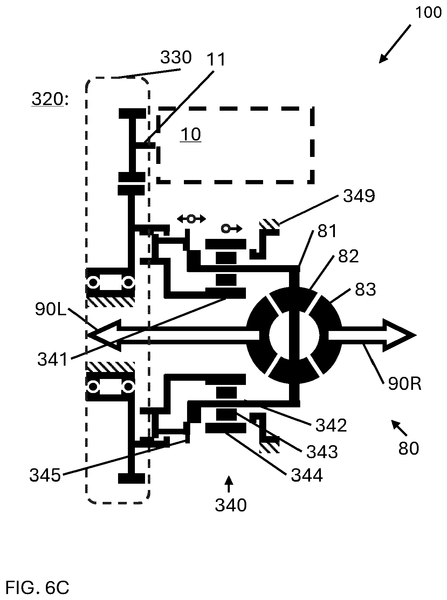

In FIG. 6C, the first clutch member 345 is in a position between the first clutch member first position and the first clutch member second position, and the second clutch member 344 is in the second clutch member second position.

This is an intermediate stage that is passed during the shifts at which both the output 333 from the reduction gearset 330 and the second planetary gear member 342 are rotationally connected to the first planetary gear member 341. The third planetary gear member 344 is unconnected and can thus rotate to facilitate the alignment needed. This may ensure that the first planetary gear member 341 and the third planetary gear member 344 are rotationally controlled at all times.

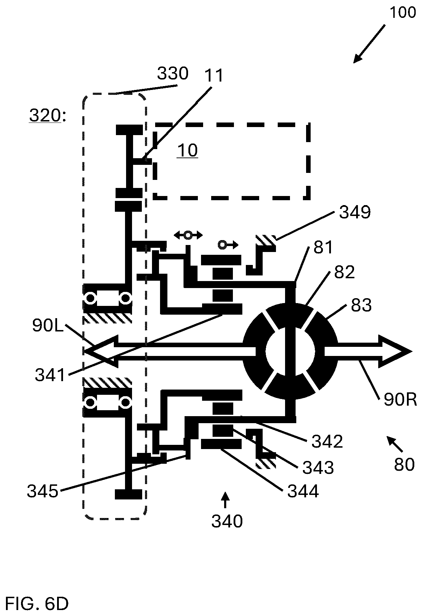

In FIG. 6D, the first clutch member 345 is in the first clutch member second position and the second clutch member 344 is in the second clutch member second position. This transmission gear state may be denoted an ecoroll mode of the transmission arrangement. In this state, the power unit 10 and reduction gearset 330 are completely disconnected from the at least one drive shaft 90L/R, thereby also disconnected from the drive wheels 201. The power unit 10 and reduction gearset 330 can thus be non-rotating with zero losses when the vehicle 200 is rolling freely without connected power unit. The planetary gearset 340 is locked by the rotational connection between the first planetary gear member 341 and the second planetary gear member 342 and rotates as one unit, thereby minimizing internal losses and making the rotation of all its members known. The rotation of the planetary gearset 340 is controlled by the at least one drive shaft 90L, 90R.

In FIG. 6E, the first clutch member 345 is in the first clutch member third position and the second clutch member 344 is in the second clutch member second position. This transmission gear state may be denoted a high speed mode of the transmission arrangement. The planetary gearset 330 is here in its direct gear state with a 1:1 speed ratio.

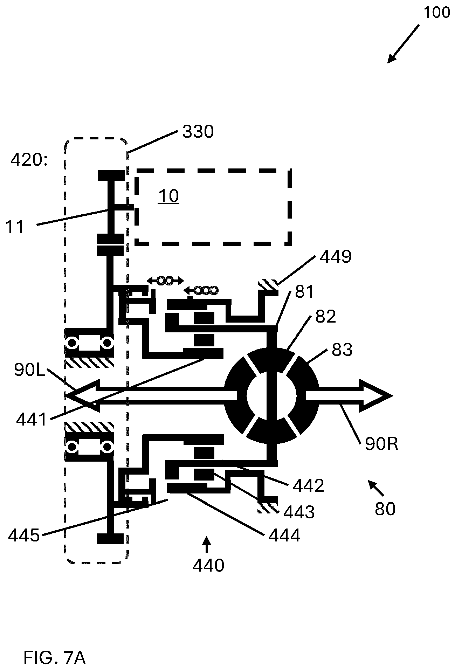

**Figs. 7A-E** is an exemplary transmission arrangement 420 and/or powertrain 100 in schematic views according to an example. More specifically, FIGS. 7A-E depict the transmission arrangement 420 in FIG. 3 when it is provided in different transmission gear states by movement of the first clutch member 445 and the second clutch member 444. It shall be noted that the transmission shifts shown in FIGS. 7A-E for the transmission arrangement 420 will be similar to the transmission gear states for the transmission arrangement 520 in FIG. 4. The respective clutch positions in FIGS. 7A-E also correspond to the clutch positions in FIGS. 6A-E.

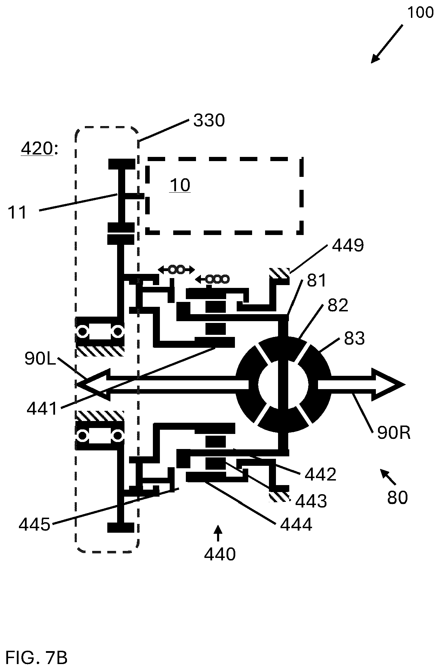

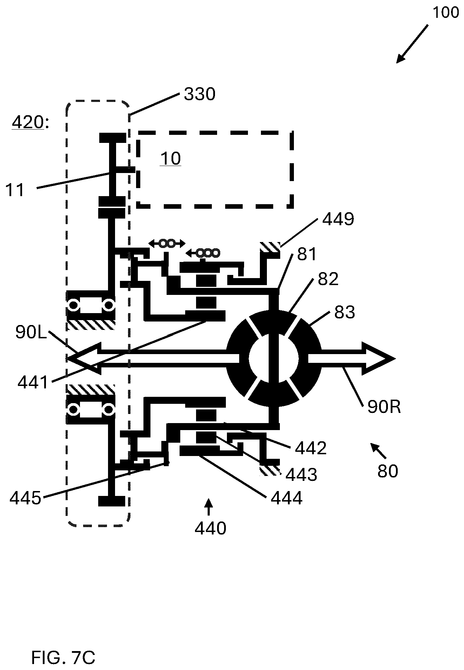

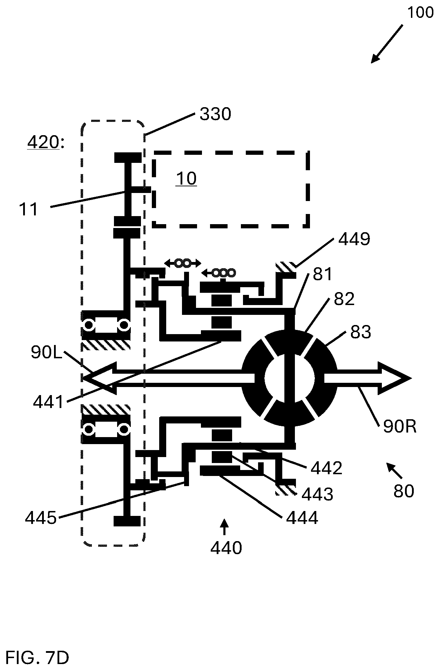

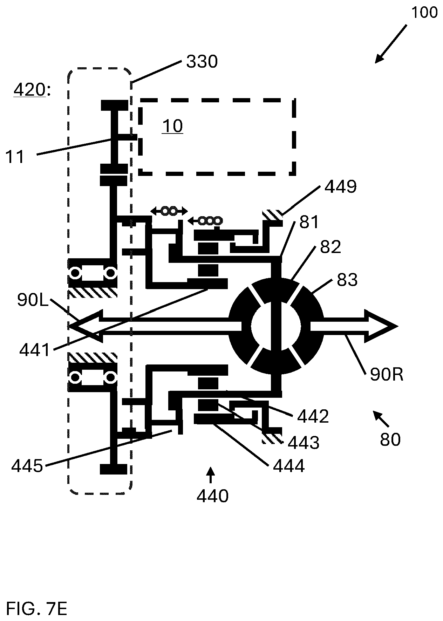

Accordingly, FIG. 7A may be denoted a low speed mode, FIG. 7B may be denoted a neutral mode, FIG. 7C corresponds to the intermediate stage in FIG. 6C, FIG. 7D may be denoted an ecoroll mode, and FIG. 7E may be denoted a high speed mode.

**FIG. 8** is an exemplary transmission arrangement 720 and/or powertrain 100 in a schematic view according to an example.

The transmission arrangement 720 comprises an input shaft 11 configured to be drivingly connected to a power unit 10 upstream from the input shaft 11.

The transmission arrangement 720 further comprises a reduction gearset 730 drivingly connected to the input shaft 11 and provided downstream the input shaft 11.

The transmission arrangement 720 further comprises a planetary gearset 740 with at least one member drivingly connectable to an output 733 of the reduction gearset 730 and provided downstream the reduction gearset 730. The planetary gearset 740 comprises a first planetary gear member 744 (in this example a ring gearwheel), a second planetary gear member 742 (in this example a planet carrier carrying a plurality of planet gearwheels 743) and a third planetary gear member 741 (in this example a sun gearwheel). The planetary gearset 740 is further configured to be shiftable between at least two planetary gear states, comprising a direct gear state with a 1:1 speed ratio and a speed reduction gear state.

The transmission arrangement 720 further comprises a first clutch member 745 movable between at least two, preferably at least three, different first clutch member positions.

The transmission arrangement 720 also comprises a second clutch member 741 and a fixed member 749 to which the sun gearwheel 741 is rotationally connectable, i.e., so that it can selectively be rotationally connected or free with respect to the fixed member 749. Similar to the above, in this example the sun gearwheel 741 is axially movable, i.e., the sun gearwheel 741 is also the second clutch member 741.

The transmission arrangement 720 is configured such that, the first clutch member 745 can rotationally connect the output 733 of the reduction gearset 730 to the first and second planetary gear members 744, 742, the second clutch member 741 can rotationally connect the third planetary gear member 741 to the fixed member 749 of the transmission arrangement 720, and either the first or second clutch member 745, 741 can selectively and simultaneously rotationally connect at least two planetary gear members of the first, second and third planetary gear members 741, 742, 744. Also, the planet carrier 742 is permanently rotationally connected to a planetary gearset output 746.

In the example shown in FIG. 8, the first clutch member 745 can selectively and simultaneously rotationally connect at least two planetary gear members of the first, second and third planetary gear members 741, 742, 744. More specifically, in this example the first clutch member 745 can selectively and simultaneously rotationally connect the first planetary gear member 744 and the second planetary gear member 742.

As shown in FIG. 8, the transmission arrangement 720 may be configured such that, in each one of the at least two, preferably the at least three, different first clutch member positions, the first clutch member 745 is rotationally connected to the ring gearwheel 744 and further rotationally connected to at least one of the output 733 of the reduction gearset 730 and the planet carrier 742.

The configuration of the transmission arrangement 720 in FIG. 8 may result in a smaller speed reduction from the input shaft 11 to the planetary gearset output 746, compared to the corresponding possible speed reduction of the transmission arrangement 320 in e.g. FIG. 2.

In a low speed mode, the first clutch member 745 is moved to the left and rotationally connects the ring gearwheel 744 to the output 733 from the reduction gearset 730. The sun gearwheel 741 is moved to the left and rotationally connected to the fixed member 749.

In a high speed mode, the first clutch member 745 is held in the middle and rotationally connects the output 733 from the reduction gearset 730 to the planet carrier 742, in addition to being rotationally connected to the ring gearwheel 744. The planetary gearset 740 is thus bypassed. In addition, the ring gearwheel 744 and the planet carrier 742 are rotationally connected and thus lock the planetary gearset 740. The sun gearwheel 741 is in its right position.

In an ecoroll mode, the first clutch member 745 is moved to the right connecting the first and second members of the planetary gear while not connected to the output 733 of the reduction gearset 730. The sun gearwheel 741 is in its right position.

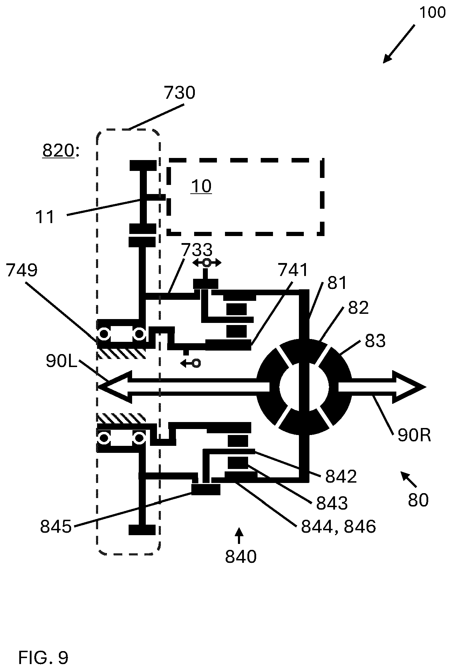

**FIG. 9** is an exemplary transmission arrangement 820 and/or powertrain 100 in a schematic view according to an example.

The transmission arrangement 820 comprises an input shaft 11 configured to be drivingly connected to a power unit 10 upstream from the input shaft 11.

The transmission arrangement 820 further comprises a reduction gearset 730 drivingly connected to the input shaft 11 and provided downstream the input shaft 11.

The transmission arrangement 820 further comprises a planetary gearset 840 drivingly connectable to an output 733 of the reduction gearset 730 and provided downstream the reduction gearset 730. The planetary gearset 840 comprises a first planetary gear member 842 (in this example a planet carrier carrying a plurality of planet gearwheels 843), a second planetary gear member 844 (in this example a ring gearwheel) and a third planetary gear member 741 (in this example a sun gearwheel). The planetary gearset 840 is further configured to be shiftable between at least two planetary gear states, comprising a direct gear state with a 1:1 speed ratio and a speed increase gear state.

The transmission arrangement 820 further comprises a first clutch member 845 movable between at least two, preferably at least three, different first clutch member positions.

The transmission arrangement 820 also comprises a second clutch member 741 and a fixed member 749 to which the sun gearwheel 741 is rotationally connectable.

The transmission arrangement 820 is configured such that, the first clutch member 845 can rotationally connect the output 733 of the reduction gearset 730 to the first and second planetary gear members 842, 844, the second clutch member 741 can rotationally connect the third planetary gear member 741 to a fixed member 749 of the transmission arrangement 720, and either the first or second clutch member 845, 741 can selectively and simultaneously rotationally connect at least two planetary gear members of the first, second and third planetary gear members 842, 844, 741. Also, the ring gearwheel 844 is permanently rotationally connected to a planetary gearset output 846.

In the example shown in FIG. 9, the first clutch member 845 can selectively and simultaneously rotationally connect at least two planetary gear members of the first, second and third planetary gear members 741, 742, 744. More specifically, in this example the first clutch member 845 can selectively and simultaneously rotationally connect the first planetary gear member 842 and the second planetary gear member 844.

As shown in FIG. 9, the transmission arrangement 820 may be configured such that, in each one of the at least two, preferably the at least three, different first clutch member positions, the first clutch member 845 is rotationally connected to the planet carrier 842 and further rotationally connected to at least one of the output 733 of the reduction gearset 730 and the ring gearwheel 844.

In a low speed mode, the first clutch member 845 is held in the middle and rotationally connects the output 733 from the reduction gearset 730 to the planet carrier 842, in addition to being rotationally connected to the ring gearwheel 844. The planetary gearset 840 is thus bypassed. In addition, the ring gearwheel 844 and the planet carrier 842 are rotationally connected and thus lock the planetary gear train 840. The sun gearwheel 841 is in its right position.

In a high speed mode, the first clutch member 845 is moved to the left and rotationally connects the planet carrier 842 to the output 733 from the reduction gearset 730. The sun gearwheel 841 is moved to the left and rotationally connected to the fixed member 749.

In an ecoroll mode, the first clutch member 845 is moved to the right and not connected to the output 733 of the reduction gearset 730. The sun gearwheel 741 is in its right position.

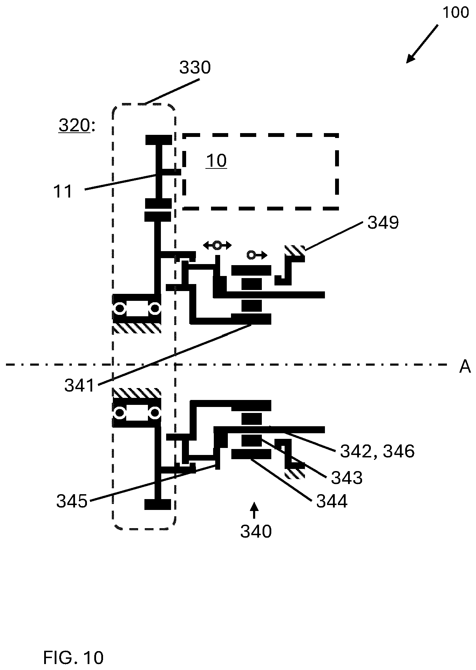

**FIG. 10** is an exemplary transmission arrangement 320 and/or powertrain 100 in a schematic view according to an example. The transmission arrangement 320 in FIG. 10 corresponds to the transmission arrangement 320 in Fig. 2 with the difference that the differential gear 80 has been omitted.

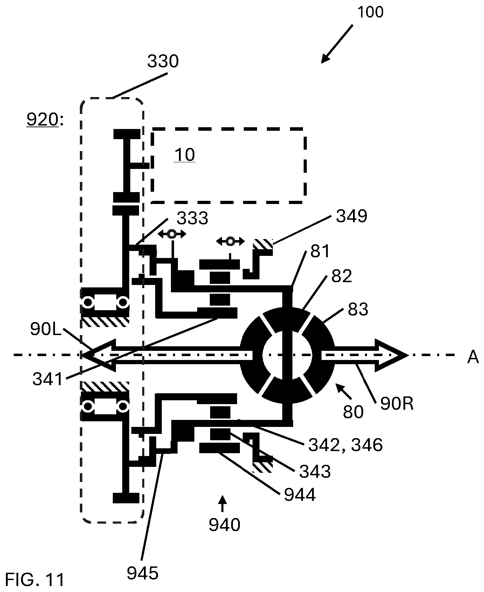

**FIG. 11** is an exemplary transmission arrangement 920 and/or powertrain 100 in a schematic view according to an example. The transmission arrangement 320 in FIG. 11 is for example similar to the example shown in FIG. 2, with a difference that the second clutch member 944 is also configured to be provided in a second clutch member third position in which the second clutch member 944 rotationally connects the third planetary gear member 344 with the second planetary gear member 342, thereby internally locking the planetary gearset 340. The first clutch member 945 is in this example not able to internally lock the planetary gearset 940, e.g., the first clutch member 945 is not able to rotationally connect the first planetary gear member 341 with the second planetary gear member 342 as in the FIG. 2 example.

The transmission arrangement 320 in FIG. 11 is configured such that the first clutch member 345 can rotationally connect the output 333 of the reduction gearset 330 to the first and second planetary gear members 341, 342, the second clutch member 344 can rotationally connect the third planetary gear member 344 to a fixed member 349 of the transmission arrangement 320, and either the first or second clutch member 345, 344 can selectively and simultaneously rotationally connect at least two planetary gear members of the first, second and third planetary gear members 341, 342, 344.

As noted in the above, in this example the second clutch member 344 can selectively and simultaneously rotationally connect the second and the third planetary gear members 342, 344.

By a "driving connection" between two rotating parts is herein intended that torque can be transmitted between the parts, and that the rotational speeds of the parts are proportional. For example, when two gearwheels are drivingly connected, torque can be transmitted between the gearwheels. This may be achieved by the gearwheels being in meshing engagement, or by a first gearwheel being in meshing engagement with a second gearwheel, which is in turn in meshing connection with a third gearwheel, or by a first gearwheel being in meshing engagement with a second gearwheel, which is rotationally connected to a third gearwheel, which is in turn in meshing connection with a fourth gearwheel. Thus, in order to be drivingly connected, it is not necessary that two gearwheels are in meshing engagement. It is sufficient that the rotation of one of the gearwheels inevitably leads to the rotation of the other one of the gearwheels.

By "rotationally connected" between two rotating parts is herein intended that the parts are arranged to rotate together with each other, i.e., a rotation of one part results in a corresponding rotation of the other part. By "rotationally disconnected" or "rotationally free" between at least one rotating part and another part is herein intended that the at least one rotating part is free to rotate relative the other part. Accordingly, by "rotationally fixed" is herein intended that at least one rotatable part is not free to rotate with respect to another part.

In the following, possible features and feature combinations of the present disclosure are presented as a list of Examples.

Example 1: A transmission arrangement (320) for a vehicle (200), comprising:
- an input shaft (11) configured to be drivingly connected to a power unit (10) upstream from the input shaft (11),
- a reduction gearset (330) drivingly connected to the input shaft (11) and provided downstream the input shaft (11),
- a planetary gearset (340) with at least one member drivingly connectable to an output (333) of the reduction gearset (330) and provided downstream the reduction gearset (330), wherein the planetary gearset (340) comprises a first planetary gear member (341), a second planetary gear member (342), and a third planetary gear member (344), and is further configured to be shiftable between at least two planetary gear states, comprising a direct gear state with a 1:1 speed ratio and a speed reduction or increase gear state,
- a planetary gearset output (346) configured to transfer torque to at least one drive shaft (90L, 90R) downstream the planetary gearset (340),
- a first clutch member (345) movable between at least two different first clutch member positions,
- a second clutch member (344) movable between at least two different second clutch member positions,
wherein
the transmission arrangement (320) is configured such that, the first clutch member (345) can rotationally connect the output (333) of the reduction gearset (330) to the first and second planetary gear members (341, 342), the second clutch member (344) can rotationally connect the third planetary gear member (344) to a fixed member (349) of the transmission arrangement (320), and either the first or second clutch member (345, 344) can selectively and simultaneously rotationally connect at least two planetary gear members of the first, second and third planetary gear members (341, 342, 344), and
the second planetary gear member is (342) permanently rotationally connected to the planetary gearset output (346).

Example 2: The transmission arrangement (320) according to Example 1, wherein the first clutch member (345) is movable between at least three different first clutch member positions and the transmission arrangement (320) is configured such that, in at least one of the at least three different first clutch member positions of the first clutch member (345), the output (333) of the reduction gearset (330) is rotationally free with respect to the planetary gearset (340).

Example 3: The transmission arrangement (320) according to any one of the preceding Examples, wherein the at least two different first clutch member positions of the first clutch member (345) comprise any one or any combination of:
a first clutch member first position in which the first clutch member (345) is rotationally connected to the first planetary gear member (341) and to the output (333) of the reduction gearset (330), and is further rotationally free with respect to the second planetary gear member (342),
a first clutch member second position in which the first clutch member (345) is rotationally connected to the first planetary gear member (341) and to the second planetary gear member (342), and is further rotationally free with respect to the output (333) of the reduction gearset (330), and
a first clutch member third position in which the first clutch member (345) is rotationally connected to the first planetary gear member (341), the output (333) of the reduction gearset (330) and the second planetary gear member (342).

Example 4: The transmission arrangement (320) according to Example 3, wherein the first clutch member (345) is rotationally connected to the first planetary gear member (341) and further rotationally connected to at least one of the output (333) of the reduction gearset (330) and to the second planetary gear member (342) during all intermediate positions between the first clutch member first and second positions.

Example 5: The transmission arrangement (420) according to any one of the preceding Examples, wherein the first clutch member (445) and the second clutch member (444) are configured to be moved in unison during shifting.

Example 6: The transmission arrangement (520) according to Example 5, wherein the first clutch member (545) and the second clutch member (544) are mechanically connected such that a shifting force exerted on one of the first clutch member (545) and the second clutch member (544) by a shift member is distributed between the first clutch member (545) and the second clutch member (544) such that the first clutch member (545) and the second clutch member (544) are moved in unison during shifting.

Example 7: The transmission arrangement (320) according to any one of the preceding Examples, wherein the reduction gearset (330) comprises a first gearwheel (331) and a second gearwheel (332) which are drivingly connected, wherein the second gearwheel (332) is provided downstream the first gearwheel (331) and wherein the second gearwheel (332) and the planetary gearset (340) are coaxially arranged and configured to rotate with respect to a common rotational axis (A).

Example 8: The transmission arrangement (320) according to any one of the preceding Examples, further comprising a differential gear (80) with its input drivingly connected to the planetary gearset output (346) and provided downstream the planetary gearset output (346), wherein output members (83) of the differential gear (80) are configured to be rotationally connected to the at least one drive shaft (90L, 90R) downstream the differential gear (80).

Example 9: The transmission arrangement (320) according to Example 7 and 8, wherein the differential gear (80), the second gearwheel (332) and the planetary gearset (340) are coaxially arranged and configured to rotate with respect to the common rotational axis (A).

Example 10: The transmission arrangement (620) according to Example 8, further comprising a bevel gearset (650) rotationally connected to the planetary gearset output (646) and provided downstream the planetary gearset output (646), wherein the differential gear with its input (80) is drivingly connected to the bevel gearset (650) and provided downstream the bevel gearset (650), and wherein output members (83) of the differential gear (80) are configured to be rotationally connected to the at least one drive shaft (690L, 690R).

Example 11: The transmission arrangement (620) according to Example 10, wherein a differential gear rotational axis (A1) is perpendicular to a planetary gear rotational axis (A).

Example 12: The transmission arrangement (320) according to any one of the preceding Examples, wherein the first, second and third planetary gear members (341, 342, 344) are a combination of a sun gearwheel (341), a planet carrier (342) carrying a plurality of planet gearwheels (343), and a ring gearwheel (344).

Example 13: The transmission arrangement (320) according to Example 12, wherein the first planetary gear member (341) is the sun gearwheel (341).

Example 14: The transmission arrangement (320) according to any one of Examples 12 or 13, wherein the second planetary gear member (342) is the planet carrier (342).

Example 15: The transmission arrangement (320) according to any one of Examples 12-14, wherein the third planetary gear member (344) is the ring gearwheel (344).

Example 16: The transmission arrangement (820) according to Example 12, wherein the second planetary gear member (844) is the ring gearwheel (844).

Example 17: The transmission arrangement (720) according to Example 12, wherein the third planetary gear member (741) is the sun gearwheel (741).

Example 18: A powertrain (100) for a vehicle (200) comprising a power unit (10), at least one drive shaft (90L, 90R) and a transmission arrangement (320) according to any one of the preceding Examples.

Example 19: The powertrain (100) according to Example 18, wherein the planetary gearset (340) and the at least one drive shaft (90L, 90R) are coaxially arranged and configured to rotate with respect to a common rotational axis (A).

Example 20: A vehicle (200) comprising a transmission arrangement (320) according to any one of Examples 1-17 or a powertrain (100) according to any one of Examples 18-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A transmission arrangement (320) for a vehicle (200), comprising:
- an input shaft (11) configured to be drivingly connected to a power unit (10) upstream from the input shaft (11),
- a reduction gearset (330) drivingly connected to the input shaft (11) and provided downstream the input shaft (11),
- a planetary gearset (340) with at least one member drivingly connectable to an output (333) of the reduction gearset (330) and provided downstream the reduction gearset (330), wherein the planetary gearset (340) comprises a first planetary gear member (341), a second planetary gear member (342), and a third planetary gear member (344), and is further configured to be shiftable between at least two planetary gear states, comprising a direct gear state with a 1:1 speed ratio and a speed reduction or increase gear state,
- a planetary gearset output (346) configured to transfer torque to at least one drive shaft (90L, 90R) downstream the planetary gearset (340),
- a first clutch member (345) movable between at least two different first clutch member positions,
- a second clutch member (344) movable between at least two different second clutch member positions, wherein
the transmission arrangement (320) is configured such that, the first clutch member (345) can rotationally connect the output (333) of the reduction gearset (330) to the first and second planetary gear members (341, 342), the second clutch member (344) can rotationally connect the third planetary gear member (344) to a fixed member (349) of the transmission arrangement (320), and either the first or second clutch member (345, 344) can selectively and simultaneously rotationally connect at least two planetary gear members of the first, second and third planetary gear members (341, 342, 344), and
the second planetary gear member is (342) permanently rotationally connected to the planetary gearset output (346).

2. The transmission arrangement (320) according to claim 1, wherein the first clutch member (345) is movable between at least three different first clutch member positions and the transmission arrangement (320) is configured such that, in at least one of the at least three different first clutch member positions of the first clutch member (345), the output (333) of the reduction gearset (330) is rotationally free with respect to the planetary gearset (340).

3. The transmission arrangement (320) according to any one of the preceding claims, wherein the at least two different first clutch member positions of the first clutch member (345) comprise any one or any combination of:
a first clutch member first position in which the first clutch member (345) is rotationally connected to the first planetary gear member (341) and to the output (333) of the reduction gearset (330), and is further rotationally free with respect to the second planetary gear member (342),
a first clutch member second position in which the first clutch member (345) is rotationally connected to the first planetary gear member (341) and to the second planetary gear member (342), and is further rotationally free with respect to the output (333) of the reduction gearset (330), and
a first clutch member third position in which the first clutch member (345) is rotationally connected to the first planetary gear member (341), the output (333) of the reduction gearset (330) and the second planetary gear member (342).

4. The transmission arrangement (320) according to claim 3, wherein the first clutch member (345) is rotationally connected to the first planetary gear member (341) and further rotationally connected to at least one of the output (333) of the reduction gearset (330) and to the second planetary gear member (342) during all intermediate positions between the first clutch member first and second positions.

5. The transmission arrangement (420) according to any one of the preceding claims, wherein the first clutch member (445) and the second clutch member (444) are configured to be moved in unison during shifting.

6. The transmission arrangement (520) according to claim 5, wherein the first clutch member (545) and the second clutch member (544) are mechanically connected such that a shifting force exerted on one of the first clutch member (545) and the second clutch member (544) by a shift member is distributed between the first clutch member (545) and the second clutch member (544) such that the first clutch member (545) and the second clutch member (544) are moved in unison during shifting.

7. The transmission arrangement (320) according to any one of the preceding claims, wherein the reduction gearset (330) comprises a first gearwheel (331) and a second gearwheel (332) which are drivingly connected, wherein the second gearwheel (332) is provided downstream the first gearwheel (331) and wherein the second gearwheel (332) and the planetary gearset (340) are coaxially arranged and configured to rotate with respect to a common rotational axis (A).

8. The transmission arrangement (320) according to any one of the preceding claims, further comprising a differential gear (80) with its input drivingly connected to the planetary gearset output (346) and provided downstream the planetary gearset output (346), wherein output members (83) of the differential gear (80) are configured to be rotationally connected to the at least one drive shaft (90L, 90R) downstream the differential gear (80).

9. The transmission arrangement (320) according to claim 7 and 8, wherein the differential gear (80), the second gearwheel (332) and the planetary gearset (340) are coaxially arranged and configured to rotate with respect to the common rotational axis (A).

10. The transmission arrangement (620) according to claim 8, further comprising a bevel gearset (650) rotationally connected to the planetary gearset output (646) and provided downstream the planetary gearset output (646), wherein the differential gear (80) with its input is drivingly connected to the bevel gearset (650) and provided downstream the bevel gearset (650), and wherein output members (83) of the differential gear (80) are configured to be rotationally connected to the at least one drive shaft (690L, 690R).

11. The transmission arrangement (620) according to claim 10, wherein a differential gear rotational axis (A1) is perpendicular to a planetary gear rotational axis (A).

12. The transmission arrangement (320) according to any one of the preceding claims, wherein the first, second and third planetary gear members (341, 342, 344) are a combination of a sun gearwheel (341), a planet carrier (342) carrying a plurality of planet gearwheels (343), and a ring gearwheel (344).

13. A powertrain (100) for a vehicle (200) comprising a power unit (10), at least one drive shaft (90L, 90R) and a transmission arrangement (320) according to any one of the preceding claims.

14. The powertrain (100) according to claim 13, wherein the planetary gearset (340) and the at least one drive shaft (90L, 90R) are coaxially arranged and configured to rotate with respect to a common rotational axis (A).

15. A vehicle (200) comprising a transmission arrangement (320) according to any one of claims 1-12 or a powertrain (100) according to any one of claims 13-14.
